# EUROPEAN PATENT SPECIFICATION

(11) **EP 3 929 113 B1**
(45) Date of publication and mention of the grant of the patent: **23.10.2024**
(21) Application number: 21179980.4
(22) Date of filing: 17.06.2021
(51) Int. Cl.: B65G 39/20, B61B 13/04, F16C 29/12, B65G 65/00, F16C 29/04, B65G 35/06

(54) **MATERIAL HANDLING SYSTEM BY MEANS OF TRACK AND CARRIAGES**
MATERIALHANDHABUNGSSYSTEM MITTELS SCHIENE UND WAGEN
SYSTÈME DE MANUTENTION DE MATÉRIAUX AU MOYEN D'UN GUIDE ET DE CHARIOTS

(30) Priority: 25.06.2020 IT 202000015373
(43) Date of publication of application: 29.12.2021
(73) Proprietor: SONZOGNI CAMME S.P.A., 24045 Fara Gera d'Adda, Bergamo (IT)
(72) Inventor: FUSTINONI, Roberto, 25036 PALAZZOLO SULL'OGLIO (BS) (IT)
(74) Representative: Gatti, Enrico

(56) References cited:
- EP-A1- 3 476 773
- DE-A1- 102011 004 783
- US-A- 3 259 021

## Description

The present invention relates to a system for transporting materials by means of track and carriages, and more in particular it refers to a carriage with rollers designed to move on a track.

The transporting system allows carriages to run on tracks to transport loads between various processing stations, for example along an assembly line.

In transporting systems, the track generally consists of straight and curved portions that form both closed and open paths, and are often mounted on a base plate to provide a support.

The carriages that run on these tracks have rollers that rest on the sides of the track, and must be mounted so as to maintain a tight tolerance between the rollers and the profiles of the track along the entire guide system, thus providing a correct adhesion between them to allow transport.

In fact, the carriages, mounted on a straight portion and having the rollers positioned with a suitable fixing (clearance) for a straight portion, due to the variation in the clearance, when travelling along the curved portions of the track can have problems of the rollers rubbing or sticking during movement of the carriage along the track.

Examples of guide systems of the type described above can be found in the documents EP 2617620 and GB 2261863.

The document EP 2617620 discloses a carriage in which three shaped rollers are mounted in fixed position with respect to the carriage and the width of the track between the two profiles varies so as to maintain a tight tolerance between the rollers and the profiles of the track along the whole of the guide system, in particular along the portions of the track that join curved and straight portions or between curves with variable radii. In this case, positioning of the rollers of the carriages requires extremely accurate adjustment during assembly. A regulation of this type is typically produced, through the use of specific instruments, by skilled technicians and cannot be entrusted to the normal operators of the automatic machines to which the guide systems are typically applied. Moreover, the intervention of skilled technicians is also required to remove the carriages from the closed paths for ordinary cleaning and/or maintenance operations.

To produce tracks with variable width to maintain the clearance between the carriage and the track constant both in the connecting portions between straight and curved portions and in the connecting portions between curves with different radii, an extremely precise and difficult calculation is required.

The document GB 2261863 describes a carriage with three rollers, which moves on a track that lies on a vertical plane, at least one of which is provided with a pressure device, which moves along a track of variable width to be able to freely manage the coupling pressure of the rollers on the profiles of the track.

Moreover, in the patent GB 2261863 the rollers are cylindrical and the coupling profiles on the sides of the track are straight along a line orthogonal to the plane on which the track lies. Maintaining the carriages in a direction orthogonal to that of the plane on which the track lies is delegated to other idle rollers mounted rigidly on the carriage.

Due to the pressure devices and the use of cylindrical rollers, solutions such as the one disclosed by the patent GB 2261863 allow the use of tracks with shape and tolerances such as to simplify their design and production. However, given the shape of the rollers and of the profiles, other elements are required to maintain the carriages on the tracks.

Moreover, it can be noted in general that in guide systems with carriages provided with pressure devices, if the resultant of the external forces acting on the carriage were to exceed the force generated by the pressure device, one or more rollers would detach from the track.

Therefore, in these systems the force exerted by the pressure system must be calculated as a function of the loads acting on the carriage in operation. If this pressure is not managed, for example, with variation of the width of the guide, it is constantly present on the rollers even when the carriages are not subjected to the maximum external loads.

The above causes the rollers to be loaded at all times, even in situations in which this is not necessary, limiting the useful life of the components and/or making it necessary to oversize the mechanical members.

Although the solution disclosed in the patent application EP 2617620 simplifies production of the carriage with respect to the state of the art, the design and production of the profiles of the tracks is more complicated. Imprecisions in calculation or errors in production for the profiles of the tracks in the order of hundredths of millimetre can cause clearance, rubbing or sticking of the rollers during movement of the carriage along the track. The phenomena described limit the useful life of the rollers and of the tracks.

Besides the extreme precision of calculation and production of the profiles of the tracks, the rollers of the carriages, as described in the patent application EP 2617620, require extremely accurate adjustment of the position during assembly. An adjustment of this type is typically implemented through the use of specific instruments, by skilled technicians and cannot be entrusted to the normal operators of the automatic machines to which the guide systems are typically applied. This means that any removal of the carriages from the closed paths for ordinary cleaning and/or maintenance operations also requires the intervention of skilled technicians.

Moreover, the carriages and the tracks, as described in the patent application EP 2617620, do not allow any adjustment of the coupling load between rollers and profiles through a specific variation of the thickness of the rails as described in the patent GB 2261863.

Also the document US3259021 discloses a system for transporting materials according to the preamble of claim 1. In particular, the document discloses a mobile unit wherein a platform is supported upon track by a plurality of rollers mounted in pairs on a plurality of trucks.

The object of the present invention is to provide a system for transporting materials by means of track and carriages capable of optimal movement of carriages along a straight and curved track.

Another object is that of providing a system capable of offsetting imprecisions in design or machining errors in the parts of which the guide systems are composed.

A further object is that of providing a system capable of limiting the coupling pressure between rollers and profiles of the track.

Yet another object is that of providing a system capable of disassembling and reassembling the carriages from/on the track, for cleaning and/or maintenance operations, without the use of specific instruments.

In accordance with the present invention, these objects and others still are achieved by a system for transporting materials by means of track and carriages according to claim 1.

Further features of the invention are described in the dependent claims.

The advantages of this solution with respect to the known art solutions are various.

The possibility of movement of one roller, with respect to the other two, greatly simplifies the design and production of the tracks and due to the pressure means, as produced in the present invention, it is possible to limit the coupling pressure between rollers and profiles of the track.

A possible positioning of the pressure means centrally and symmetrically to the carriage provides an equal pressure at the two opposite rollers.

This makes it possible to obtain a carriage with at least one roller that can carry out a translation movement with respect to the carriage. The translation motion takes place along an axis preferably parallel to the plane of the guide system and orthogonal to the direction of forward movement of the carriages along the track.

A pressure element acts along the translation axis.

A stop is also arranged along the translation axis to unilaterally limit the translation movement of the roller.

Through a threaded ring nut, micrometric adjustment of the position of the stop is possible.

A spring has the sole purpose of ensuring coupling between rollers and tracks with a minimum preload that allows the rollers to run without rubbing, offsetting any imprecisions in calculation or errors in production for the profiles of the tracks.

The unilateral constraint offsets any external forces regardless of the force of the spring; in fact, the distance between centres of the rollers can only become narrower due to the spring, but cannot become wider due to the stop.

Acting on the width of the guide it is possible to narrow it until creating a zone in which, overcoming the preload spring and moving the stop towards its end of travel, it is possible to easily remove the carriage without the aid of mechanical tools.

The features and advantages of the present invention will be evident from the following detailed description of a practical embodiment thereof, illustrated by way of non-limiting example in the accompanying drawings, wherein:

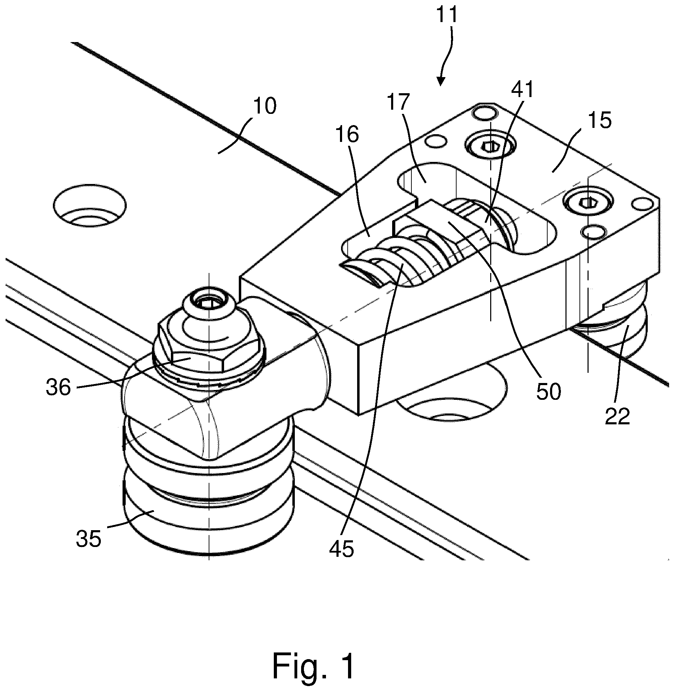

Fig. 1 shows a system for transporting materials by means of track and carriages, in accordance with the present invention;

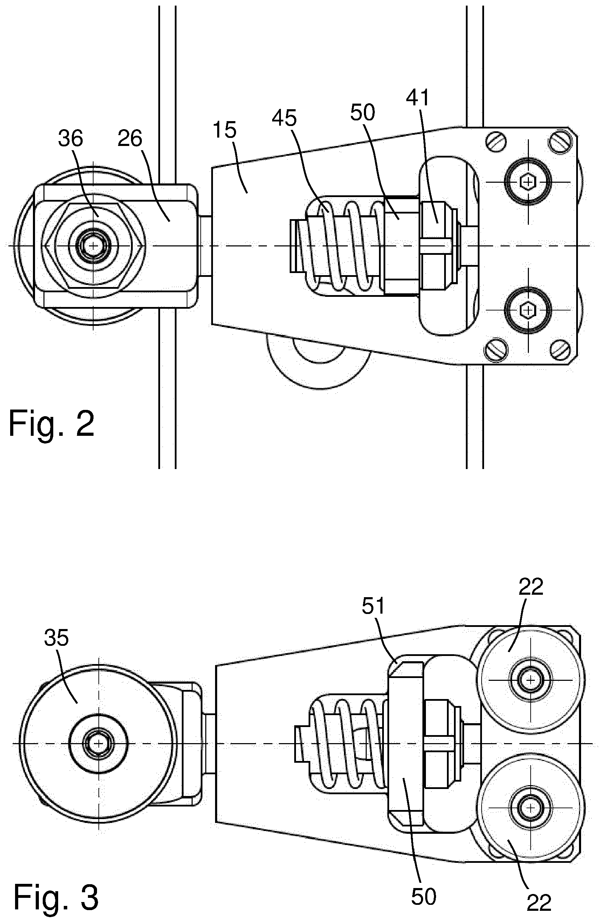

Fig. 2 shows a carriage positioned on a track of a system for transporting materials by means of track and carriages, viewed from above, in accordance with the present invention;
Fig. 3 shows a carriage positioned on a track of a system for transporting materials by means of track and carriages, viewed from below, in accordance with the present invention;

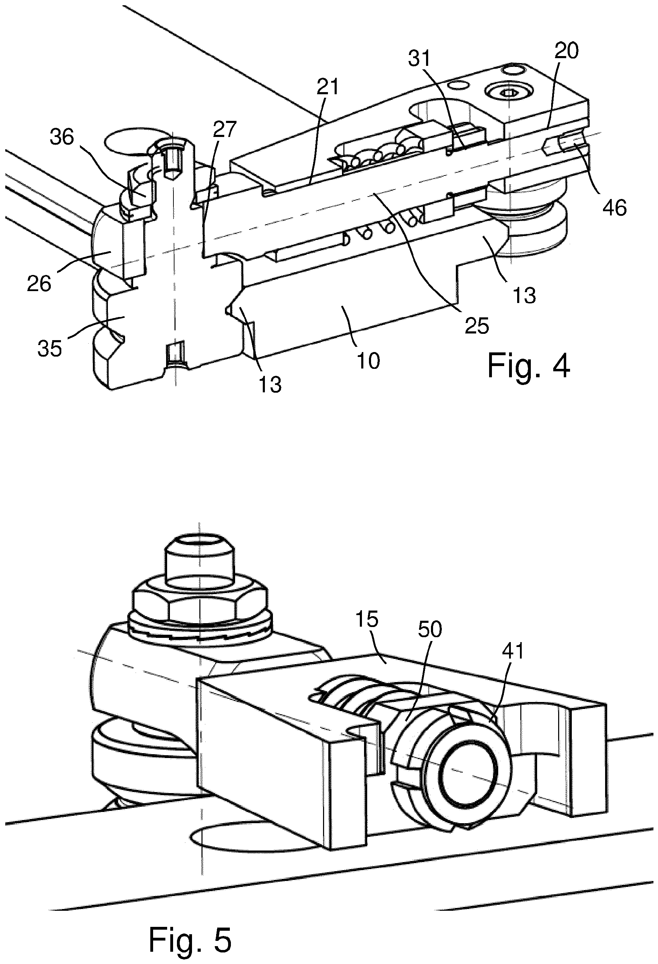

Fig. 4 shows a carriage positioned on a track of a system for transporting materials by means of track and carriages, viewed from the side and in section, in accordance with the present invention;
Fig. 5 shows a carriage positioned on a track of a system for transporting materials by means of track and carriages, viewed from behind and in section, in accordance with the present invention.

With reference to the accompanying figures, a system for transporting materials by means of track and carriages, in accordance with the present invention, comprises a track 10, and one or more carriages 11 having rollers engaged with the track 10 and which can run thereon.

The track 10 can have any form with straight portions, internal and external curves, and can have both closed and open paths.

In accordance with the present invention, the track 10 is profiled on the lateral sides, in particular the section of the track 10 is T-shaped so that it has two profiles 13 or lateral sides at the top of the track 10.

The track 10 has a width that is preferably constant both in the straight and in the curved portions.

The carriage 11 is formed of a trapezoidal or rectangular shaped frame 15 having an oblong shaped central opening 16, with a terminal widening 17, to facilitate adjustments and/or assembly.

The frame 15 has two through holes 20 and 21 positioned longitudinally to the frame 15 and will therefore be orthogonal to the direction of the track 10. Positioning of the holes 20 and 21 is central with respect to the carriage 11.

Two rollers 22, having an internally shaped (recessed) profile designed to coact with the external profiles 13 of the track 10, are fixed stably at the two sides of the hole 20, on one side of the frame 15.

The carriage 10 comprises a cylindrical bar 25 terminating on one side with an enlargement 26 that has a vertical through hole 27. The bar 25 has a size such that it can run inside the two holes 20 and 21 and a length such that the enlargement 26 is external to the frame 15. The enlargement 26 can be omitted if the bar 25 has a size sufficient to accept the hole 27.

A roller 35 is fixed to the through hole 27 of the bar 25, by means of a vertically positioned bolt 36. The roller 35 also has an internally shaped profile, designed to coact with the profiles 13 of the track 10.

It should be noted that in this case the rollers 22 and 35, just as the profiles 13 of the track, are shaped so as to constrain the carriages 11 to the track 10, leaving them free to move in the sole direction of the track 10, and therefore are supported vertically without other means besides the rollers 22 and 35.

The rollers 22 and 35 are positioned on the carriage to form an isosceles triangle at the vertex of which the roller 35 is positioned.

The bar 25 is smooth externally but has a threaded portion.

The threaded portion 31 is located on the bar 25 at the opposite end to that of the enlargement 26, and positioned inside the frame 15.

The carriage 11 comprises a ring nut 41 which is screwed onto the threaded portion 31.

The ring nut 41 is preferably of the self-locking type with nylon insert, so as to be able to tighten it and block it in the desired position.

The carriage 11 further comprises a spring 45 which is placed on the bar 25 and has a block 50 that retains the spring 45 towards the hole 20 where it abuts against the inside the frame 15. The block 50 is positioned between the opening 16 and the widening 17. In the point in which the opening 16 opens into the widening 17, in the direction of the rollers 22, it has an undercut 51 where the block 50 is positioned. The block 50 comprises a lower portion that abuts against a lower portion of the frame 15 and an upper portion that is inserted into the opening 16 which does not allow the rotation thereof.

The ring nut 41 pushes the block 50 against the undercut 51 and blocks the spring 45 between it and the end of the frame 15 towards the hole 20. The block 50 with the ring nut 41 also blocks the extension of the bar 25, beyond the position established by the ring nut 41, in the direction of the roller 35. While a movement of the bar 25 in the opposite direction, retained by the spring 45, is possible as the ring nut 41 has space to move back, towards the rollers 22, into the widening 17.

Mounting of the carriage 11 is implemented by inserting the bar 25 inside the hole 21 and before inserting it into the hole 20 the spring 45 is inserted on the bar 25, the block 50 and the ring nut 41, the last part of the bar 25 is inserted into the hole 20 and the ring nut 41 is then screwed onto the thread 31, which blocks the assembly.

The spring 45 acts along the axis defined by the bar 25, providing a pressure element given by the type and by the length of the spring 45.

The pressure of the spring 45 determines the load of the rollers 22 and 35 on the track 10.

To facilitate the thrust and disengagement operation of the roller 35, it is possible to provide a seat 46 at the end of the bar 25, for insertion of a common hexagonal key. Due to the preload and to the profiles of the rollers 22 and 35, a self-alignment of the carriage 11 on the track 10 also occurs.

Moreover, positioning of the bar 25 at the centre of the carriage and positioning of the rollers 22 at the sides of the bar 25 and at the same distance from the bar 25 make the preload exactly the same on the two rollers 22 allowing the carriage 11 to run more smoothly on the track 10.

Once the carriage 11 has been positioned on the track 10, the spring 45 provides the rollers 22 and 35 with a preload so as to prevent slipping of these rollers 22 and 35.

The carriage 11 cannot detach from the track 10 even if a very high load is applied thereto, due to the block 50 that does not allow the rollers 22 and 35 to move away from each other.

The system allows the roller 22 to move towards the rollers 35, compressing the spring 45, but they cannot move away from each other more than the distance established with the block 50 and the ring nut 41.

## Claims

1. A system for transporting materials by means of track and carriages comprising: a track (10); at least one carriage (11) engaged with said track (10); said at least one carriage (11) having a roller (35) engaged with one side of said track (10) and a pair of rollers (22) engaged on the opposite side of said track (10); said pair of rollers (22) is constrained to said carriage (11); said roller (35) is fixed to a bar (25); said bar (25) can translate with respect to said carriage (11) and comprises pressure means (45) to press said roller (35) against said track (10); said bar (25) comprises a unilateral block that does not allow the extension of said bar (25) with respect to said carriage (11) beyond a pre-set distance; said unilateral block comprises: a threaded portion (31), positioned on said bar (25), on which a ring nut (41) can be screwed; a block (50) sliding along said bar (25) constrained to said carriage (11) by means of said ring nut (41); where said pressure means (45) are positioned between said block (50) and said roller (35); said carriage (11) consists of a trapezoidal or rectangular shaped frame (15) having a central opening (16, 17); said central opening (16, 17) comprises an oblong shaped central opening (16), with a terminal widening (17); **characterised in that** said block (50) is positioned between said opening (16) and said widening (17); said block (50) comprises a lower portion that abuts against a lower portion of said frame (15) and an upper portion that is inserted into said opening (16).

2. The system in accordance with claim 1, **characterised in that** said bar (25) can run inside two through holes (20) and (21) positioned centrally to said frame (15) and transverse to said track (10).

3. The system in accordance with claim 1, **characterised in that** said bar (25) comprises a vertical through hole (27) on one side, and said threaded portion (31) is located at the opposite end to that of said hole (27) and is positioned in said widening (17).

4. The system in accordance with claim 1, **characterised in that** said bar (25) comprises a vertical through hole (27) on one side; said roller (35) is fixed to said hole (27) by means of a bolt; said bar (25) has a length such that said hole (27) is external to said frame (15).

5. The system in accordance with claim 1, **characterised in that** said track (10) has a profile (13) on the lateral sides and said roller (35) and said pair of rollers (22) have an internally shaped profile designed to coact with said profile (13) of the track (10).

6. The system in accordance with claim 1, **characterised in that** each of said rollers (22) of said pair of rollers (22) is positioned at the same distance from the bar (25).

## Patentansprüche

1. System zum Transportieren von Materialien mittels einer Schiene und Wagen, umfassend: eine Schiene (10); mindestens einen Wagen (11) der mit der besagten Schiene (10) in Eingriff steht; wobei der mindestens eine Wagen (11) eine Rolle (35), die mit einer Seite der besagten Schiene (10) in Eingriff steht, und ein Paar von Rollen (22) die auf der gegenüberliegenden Seite der besagten Schiene (10) in Eingriff stehen aufweist; das besagte Rollenpaar (22) ist an dem besagten Wagen (11) befestigt; die besagte Rolle (35) ist an einer Stange (25) befestigt; die besagte Stange (25) kann sich in Bezug auf den besagten Wagen (11) verschieben und umfasst Druckmittel (45) um die besagte Rolle (35) gegen die besagte Schiene (10) zu drücken; die besagte Stange (25) umfasst einen einseitigen Block, der die Ausdehnung der besagten Stange (25) in Bezug auf den besagten Wagen (11) über einen voreingestellten Abstand hinaus nicht zulässt; der besagte einseitige Block umfasst: einen Gewindeabschnitt (31), der auf der besagten Stange (25) positioniert ist, auf den eine Ringmutter (41) geschraubt werden kann; einen Block (50), der entlang der besagten Stange (25) gleitet, befestig an dem besagten Wagen (11) mittels der besagten Ringmutter (41); wobei die besagten Druckmittel (45) zwischen dem besagten Block (50) und der besagten Rolle (35) positioniert sind; der besagte Wagen (11) besteht aus einem trapezförmigen oder rechteckigen Rahmen (15) mit einer zentralen Öffnung (16, 17); die besagte zentrale Öffnung (16, 17) umfasst eine länglich geformte zentrale Öffnung (16), mit einer abschließenden Verbreiterung (17); **dadurch gekennzeichnet, dass** der besagte Block (50) zwischen der besagten Öffnung (16) und der besagten Verbreiterung (17) positioniert ist; der besagte Block (50) umfasst einen unteren Abschnitt, der an einem unteren Abschnitt des besagten Rahmens (15) anliegt, und einen oberen Abschnitt, der in die besagte Öffnung (16) eingesetzt ist.

2. System nach Anspruch 1, **dadurch gekennzeichnet, dass** die besagte Stange (25) in zwei Durchgangsbohrungen (20) und (21) laufen kann, die mittig zu dem besagten Rahmen (15) und quer zu der besagten Schiene (10) positioniert sind.

3. System nach Anspruch 1, **dadurch gekennzeichnet, dass** die besagte Stange (25) eine vertikale Durchgangsbohrung (27) auf einer Seite aufweist und der besagte Gewindeabschnitt (31) an dem gegenüberliegenden Ende der besagten Bohrung (27) angeordnet ist und in der besagten Verbreiterung (17) positioniert ist.

4. System nach Anspruch 1, **dadurch gekennzeichnet, dass** die besagte Stange (25) eine vertikale Durchgangsbohrung (27) auf einer Seite aufweist; die besagte Rolle (35) ist mittels eines Bolzens an der besagten Bohrung (27) befestigt; die besagte Stange (25) hat eine solche Länge, dass die besagte Bohrung (27) außerhalb des besagten Rahmens (15) liegt.

5. System nach Anspruch 1, **dadurch gekennzeichnet, dass** die besagte Schiene (10) an den Seiten ein Profil (13) aufweist und die besagte Rolle (35) und das besagte Rollenpaar (22) ein innen geformtes Profil aufweisen, das dazu bestimmt ist, mit dem besagten Profil (13) der Schiene (10) zusammenzuwirken.

6. System nach Anspruch 1, **dadurch gekennzeichnet, dass** jede der besagten Rollen (22) des besagten Rollenpaares (22) im gleichen Abstand von der Stange (25) positioniert ist.

## Revendications

1. Système servant à transporter des matériaux au moyen d'un rail et de chariots, comprenant: un rail (10); au moins un chariot (11) engagé avec ledit rail (10); au moins un dit chariot (11) ayant un rouleau (35) engagé avec un côté dudit rail (10) et une paire de rouleaux (22) engagés sur le côté opposé dudit rail (10); ladite paire de rouleaux (22) est contrainte audit chariot (11); ledit rouleau (35) est fixé à une barre (25); ladite barre (25) peut faire une translation par rapport audit chariot (11) et comprend des moyens de pression (45) pour presser ledit rouleau (35) contre ledit rail (10); ladite barre (25) comprend un bloc unilatéral qui ne permet pas l'extension de ladite barre (25) par rapport audit chariot (11) au-delà d'une distance préréglée; ledit bloc unilatéral comprend: une partie filetée (31), positionnée sur ladite barre (25), sur laquelle un écrou à encoches (41) peut être vissé; un bloc (50) glissant le long de ladite barre (25) contraint audit chariot (11) au moyen dudit écrou à encoches (41); où lesdits moyens de pression (45) sont positionnés entre ledit bloc (50) et ledit rouleau (35); ledit chariot (11) se compose d'un cadre de forme trapézoïdale ou rectangulaire (15) ayant une ouverture centrale (16, 17); ladite ouverture centrale (16, 17) comprend une ouverture centrale de forme oblongue (16), avec un élargissement à l'extrémité (17); **caractérisé en ce que** ledit bloc (50) est positionné entre ladite ouverture (16) et ledit élargissement (17); ledit bloc (50) comprend une partie inférieure qui s'appuie contre une partie inférieure dudit cadre (15) et une partie supérieure qui est insérée dans ladite ouverture (16) .

2. Système selon la revendication 1, **caractérisé en ce que** ladite barre (25) peut passer à l'intérieur de deux trous traversants (20) et (21) positionnés de manière centrale par rapport audit cadre (15) et transversalement audit rail (10) .

3. Système selon la revendication 1, **caractérisé en ce que** ladite barre (25) comprend un trou traversant vertical (27) sur un côté, et ladite partie filetée (31) est située à l'extrémité opposée par rapport à celle dudit trou (27) et est positionnée dans ledit élargissement (17).

4. Système selon la revendication 1, **caractérisé en ce que** ladite barre (25) comprend un trou traversant vertical (27) sur un côté; ledit rouleau (35) est fixé audit trou (27) au moyen d'un boulon; ladite barre (25) a une longueur telle que ledit trou (27) est externe audit cadre (15).

5. Système selon la revendication 1, **caractérisé en ce que** ledit rail (10) a un profil (13) sur les bords latéraux et ledit rouleau (35) et ladite paire de rouleaux (22) ont un profil formé à l'intérieur conçu pour agir ensemble avec ledit profil (13) du rail (10).

6. Système selon la revendication 1, **caractérisé en ce que** chacun desdits rouleaux (22) de ladite paire de rouleaux (22) est positionné à la même distance de la barre (25).
